# EUROPEAN PATENT APPLICATION

(11) **EP 0 627 339 A1**
(43) Date of publication of application: **07.12.1994**
(21) Application number: 94303978.4
(22) Date of filing: 02.06.1994
(51) Int. Cl.: B60N 2/28

(54) **Dual position child restraint with movable base support**

(30) Priority: 04.06.1993 AU PL9179/93
(71) Applicant: BRITAX CHILD-CARE PRODUCTS PTY. LTD., Melbourne, Victoria 3020 (AU)
(72) Inventor: Bowtell, William, Kilsyth, Victoria (AU)
(74) Representative: Hollinghurst, Antony

(57) **Abstract**

This invention relates to a dual position child restraint for use on a motor vehicle seat in two different position. The child restraint has a number of longitudinal stiffening ribs (14) that extend across the rear surface (11, 12) of the child restraint seat (10). The seat comprises a back portion (11) and a seat portion (12) where in a first position of use the back support (11) is in a substantially reclined position, and in a second position of use the back use portion (11) is in a substantially vertical position. The invention is characterised by the use of a base support (17) which is secured to the child restraint (10) and arranged to distribute load over a substantially large surface area to prevent damage to the vehicle seat upon which the child restraint (10) is placed. The base support (17) is arranged to be secured to the child restraint (10) in at least two positions so that it can support the child restraint (10) on the vehicle seat in either of the two positions of use. The invention allows a simplified moulding process while at the same time allowing the child restraint (10) to be used in two different positions.

## Description

This invention relates to a child restraint, and in particular to a child restraint that is capable of use in two positions.

The use of child restraints in motor vehicles is well-known. Depending on the age of the child, various types of restraints are used. For young infants from birth to the age of six months, the restraint normally comprises a cradle device which is anchored to a seat such that the child or infant's back is facing towards the direction of movement. These restraints normally provide an inclined surface for support of the back which prevents forward motion of the infant during a collision. In addition, some form of releasable belt is normally fastened around the infant to assist in keeping the infant within the cradle.

When an infant grows and increases in size, a different type of restraint is required. At the age of six months and over, the infant is quite capable of sitting upright. Therefore a child restraint or booster seat in which the infant sits upright and faces forward is used. A safety harness is used within the seat.

In both instances, the cradle for an infant from birth to six months and the child restraint for six months and over are secured to the seat of a motor vehicle with existing vehicle lap sash seat belts. Additional securing harnesses can be attached between the booster seat or cradle and the motor vehicle at a point directly behind the vehicle seat. The arrangement of harnesses and seat belts normally provide secure attachment of the restraint to the vehicle seat.

One obvious disadvantage is that as a child grows, it is necessary to discard the earlier cradle style restraint and purchase a further restraint for seating in the upright position. This represents a significant expense, and it is therefore desirable to provide a dual position child restraint which is suitable for use with a child from the age of birth to six months, and is also suitable for use with older children for seating them in an upright position.

Dual position child restraints are known, and normally comprise a seat arrangement which in a first position acts as a cradle having a sloping portion against which the back of an infant may rest, and which in a second position can be used with an infant sitting upright. A single restraint can be arranged so that it is supported on a vehicle seat in two different positions. In the case of a cradle style restraint, the infant is reclined with the cradle positioned so that the infant's back is facing the direction of travel. The back rest portion of the cradle is raised above horizontal while at the same time supporting the infant in a reclined position. Alternatively, the cradle can be repositioned so that the back rest portion is in a substantially vertical plane. In both examples the dual position child restraint requires a means of supporting the restraint in both the cradle position and the upright position on the vehicle seat.

In both positions, the security harness is adapted to secure an infant aged from birth to six months, and is adjustable for use with an older infant when the restraint is in the second position.

Dual position child restraints are somewhat more costly to manufacture by comparison to a single position child restraint. This is due to the more complex design needed for the child restraint to be supported on an existing motor vehicle seat in two positions. With conventional single position child restraints, it is possible to provide a supporting surface or an arrangement which provides sufficient surface area for stable support on the motor vehicle seat. A large surface area also minimises damage to the vehicle seat. This feature is not easily reproduced for a dual position child restraint.

It is preferable for child restraint seats to be moulded in plastic using injection moulding manufacturing techniques. In order to make such products as cheap as possible, it is preferable to simplify the cavity moulds which are used to make the basic components.

Ideally, it would be desirable to manufacture the restraint in a simple moulding operation. This would mean producing the seat, back rest and side support surfaces together with the structures which are on the underneath side of the seat portion using a simple two piece mould in a single moulding operation.

The main loading forces occurring during normal use are applied to the horizontal surface of the motor vehicle seat, and obviously it is desirable to distribute these loads over as great a surface area as possible to reduce damage to the seat. Therefore, in respect of single position child restraints, it is normal to have some form of support surface with a significant surface area which rests against the horizontal portion of the seat in combination with stiffening ribs either at the side of the restraint or along the rear surface which abut against the vertical surface of the vehicle seat.

A further requirement for child restraints is to ensure that both the seat portion and back rest portion of the seat are sufficiently stiff to absorb forces which are applied during normal use or vehicle collision. Therefore, it is normal to provide longitudinal stiffening ribs along the rear surfaces of the seat to provide the required support.

Providing such stiffening ribs or support arrangements, together with providing flat surfaces for load support, is extremely difficult when using a two piece die with a single moulding operation. This is made more difficult again if the child restraint is to be a dual position restraint.

If longitudinal stiffening ribs are used along the seat and back rest portion of a dual position child restraint, then it is difficult to economically provide a flat support surface which could be used in either of the 'in use' positions. If longitudinal stiffening ribs are in direct contact with the vehicle seat, it is virtually impossible to incorporate the desired surface area for proper support into such longitudinal ribs without the use of a complicated mould or the use of further components. Even if a large number of longitudinal ribs are used, then the normal forces applied to the seating surfaces either through the weight of the child, or the forces used to secure the restraint to the vehicle seat are likely to cause damage to the vehicle seat directly underneath the child restraint.

It is virtually impossible to incorporate the necessary surface area in such a moulding while at the same time using a simple moulding operation that uses only a two-part die.

Therefore, it is an object of this invention to provide a dual position child restraint which includes base support means which provides sufficient surface area so as to allow the child restraint to be stably supported on the vehicle seat in either of the two positions of use and which is unlikely to cause damage to the vehicle seat.

In its broadest form, the invention comprises a dual position child restraint for use on a motor vehicle seat comprising a child restraint seat having longitudinal stiffening ribs extending across the rear surfaces thereof, the seat comprising a back support portion and a seat portion and being positionable on the vehicle seat so that in a first position of use the back support portion is in a substantially reclined position, while in a second position of use the back portion is in a substantially vertical position, characterised in that the seat is provided with a base support arranged to distribute load over a substantially large surface area to prevent damage to said vehicle seat, said base support being adapted for attachment to said seat in at least two support positions so that it can support the child restraint seat on the vehicle seat in either of said two positions of use.

Preferably, the base support may be hinged to the child restraint such that it can rotate between either of the use positions. Alternatively, the base support may be releasably attached to the child restraint at two separate positions, such that the base support is positioned below the child restraint in either of the two positions of use.

Preferably, the base support is provided with channels which engage the longitudinal stiffening ribs in at least one of the two positions. This provides a degree of sideways stability so as to prevent movement of the child restraint with respect to the base support. This is achieved by ensuring that the longitudinal stiffening ribs locate within channels or recesses within the base support thereby preventing the sideways or transverse movement. The base support can be arranged so that in either of the two positions, there are channels or recesses in which the longitudinal ribs can be at least partly located.

In a further aspect of the invention, the inclination of the child restraint in either of the positions of use may be varied. This can be achieved by placing a spacer between the base support and the child restraint or providing other adjustable support means on the base support. With the child restraint in the upright seating position, the child may be reclined by placing a spacer or support means between the base support and the restraint. Preferably, the spacer may comprise a wedge-like member which is designed to positively engage both the base support and the longitudinal stiffening ribs. The support means may comprise a metal tilt frame that is pivotally attached to the base support.

In order that the invention can be fully understood, a preferred embodiment will now be described, but it should be realised that the scope of the invention is not to be confined or restricted to the precise details of this embodiment. This embodiment is illustrated in the accompanying drawings in which:
Fig 1 shows a rear perspective view of a child restraint with a base support in a position for the child restraint to be used in a forward facing upright position,
Fig 2 is a view similar to Fig 1 showing the base support in a position for the child restraint to be used in a rearward facing portion.
Fig 3 shows a side view of a child restraint fitted to a vehicle seat in a rearward facing position,
Fig 4 shows a side view of a child restraint fitted to a vehicle seat in an upright position,
Fig 5 is a view similar to Fig 4 showing the child restraint in a reclined position, and
Fig 6 is a perspective view of the base support which has fitted thereto a pivotal support frame for tilting the seat to the inclined position shown in Fig 5.

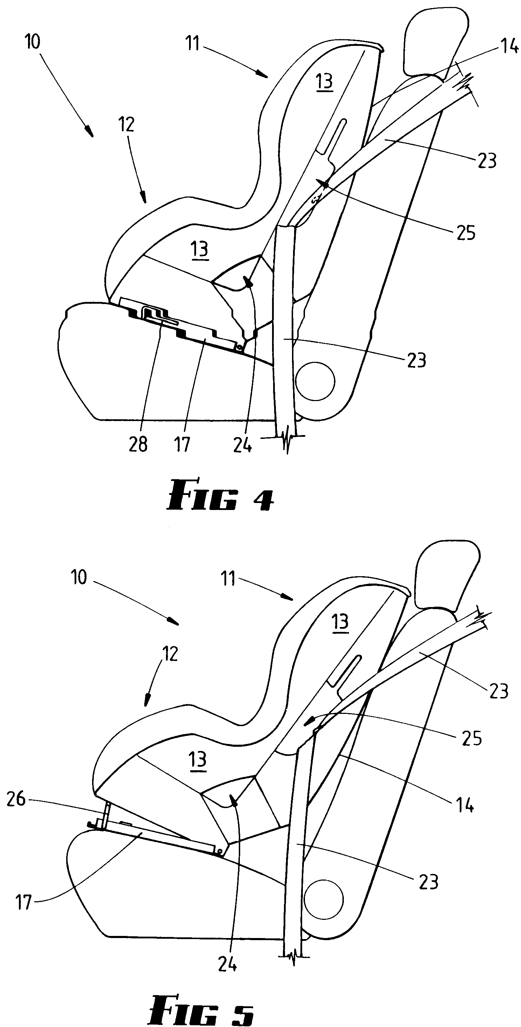

In this embodiment, the child restraint 10 comprises a back support portion 11 and a seat portion 12. Between the two positions of use, the back support portion 11 is positioned so that the infant is reclined for the cradle style application in a first use position shown in Fig 3 and in a second use position shown in Fig 4, the back support 11 is substantially vertical so that the infant can be positioned in a forwardly facing upright seating position.

The child restraint 10 is formed from a unitary moulding which comprises back support and seat portions 11 and 12, side walls 13 and longitudinal stiffening ribs 14 extending over the rear surfaces of the restraint.

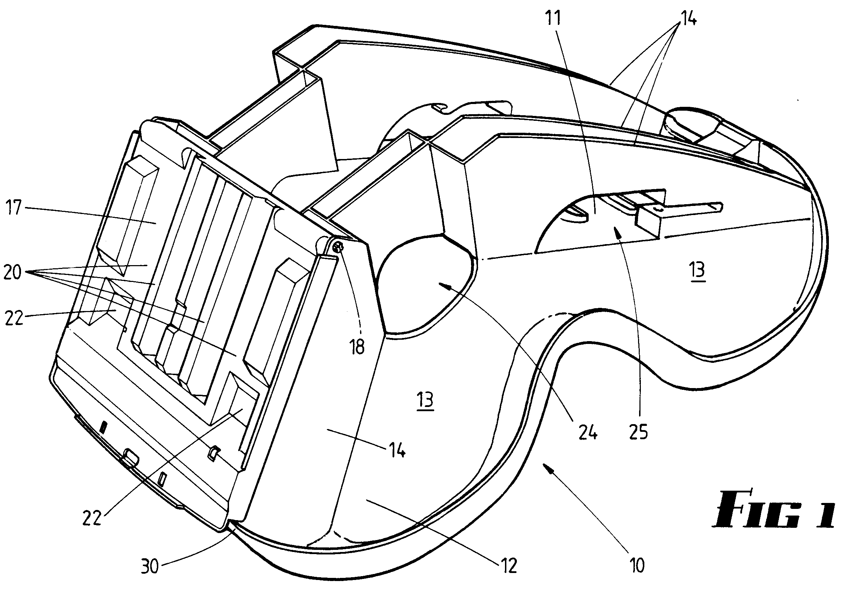

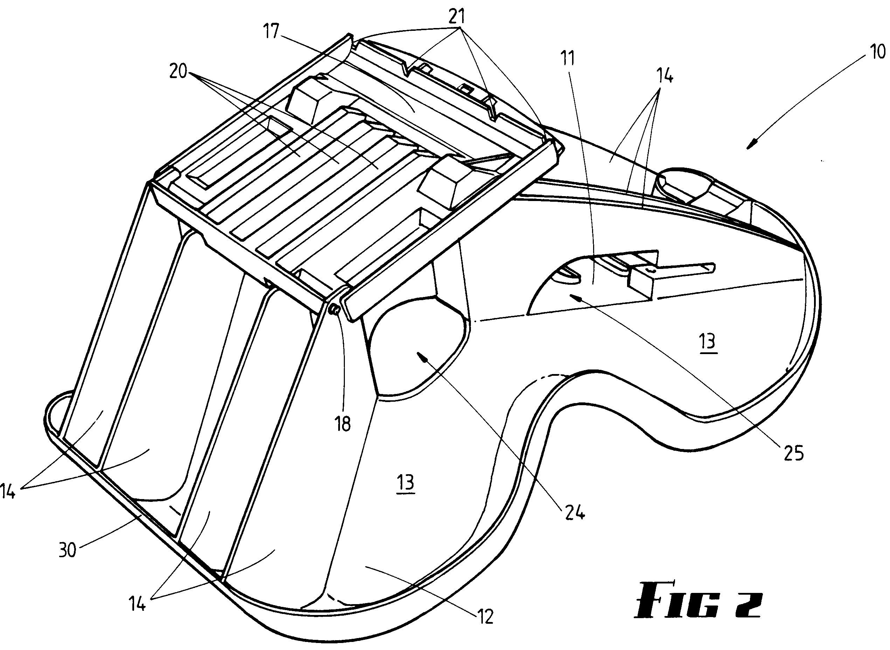

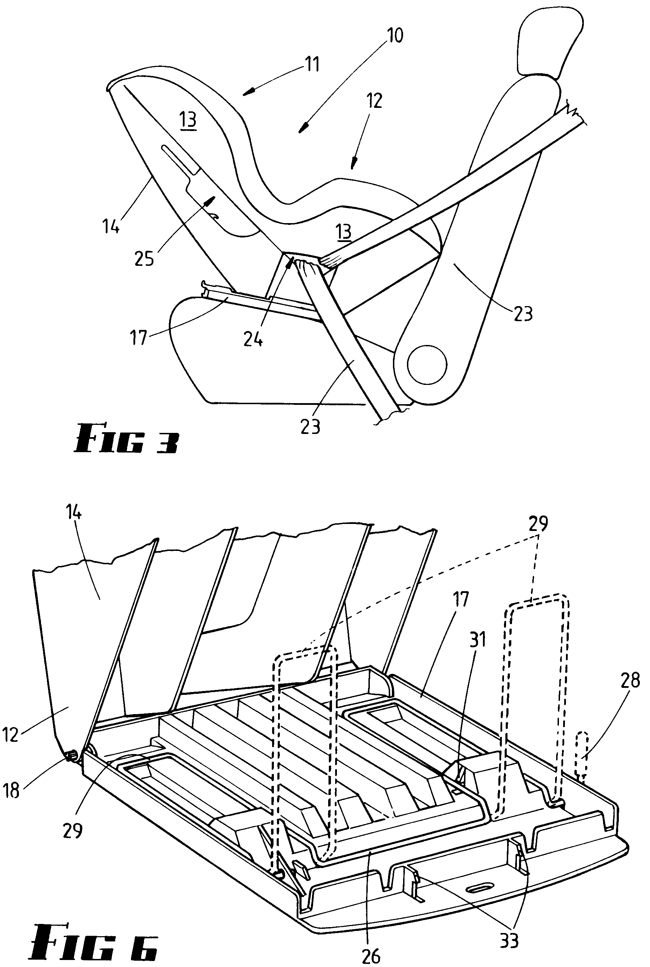

In this embodiment, a base support 17 is pivotally attached to the child restraint 10 via pivots 18, the pivotal attachment enabling the base support 17 to be moved from a position which is below the seat portion 12 (refer Figs 1 and 4) which enables the child restraint 10 to be used in an upright position with infants aged six months and older, to a second position which is below an intermediate portion of the seat formed between the back support and seat portions 11 and 12 (refer Figs 2 and 3) thereby enabling the child restraint 10 to be used in a reclined position with babies aged between birth and six months.

The base support 17 is provided with channels 20 and notches 21 in which the stiffening ribs 14 immediately below the seat portion 12 may locate when the base support 17 is positioned as shown in Fig 1. This arrangement prevents lateral movement of the base support 17. When in this position, the base support 17, has sufficient surface area to prevent damage to the vehicle seat and stably supports the restraint on the vehicle seat.

As shown in Fig 2, when the base support 17 is swung to its other position of use, the channels 20 and recesses 22 in the reverse side of the support engage over portions of the ribs 14 which interconnect the ribs on the seat back portion 11 and those under the seat portion 12.

The child restraint 10 is provided with a harness (not illustrated) which can be used with either a baby or a young infant in both of the positions of use. The back support portion 11 is provided with a plurality of apertures which enable the harness to be repositioned to accommodate infants or children of various sizes.

As with conventional child restraints, there are provided through apertures 24, 25 which allow the vehicle lap sash seat belt 23 to be used as one of the securements which hold the child restraint 10 to the vehicle seat. The lap sash seat belt 23 of the vehicle can be passed through either of the apertures 24, 25. Aperture 24 is generally used for the vehicle lap sash seat belt 23 when the restraint is rearwardly facing, whilst aperture 25 is generally used when the restraint is forwardly facing. In addition to the use of a seat belt 23, further harness straps (not drawn) may be used to secure the top of the child restraint in either of the two positions of use. These harness straps may be secured to a point of the vehicle directly behind the vehicle seat upon which the child restraint 10 is supported.

As shown in Figs 5 and 6, a support means in the form of a recline or tilt frame 26 is used to vary the angle of inclination of the child restraint 10 when used in its upright position. The frame 26 is pivotally attached to the base support 17 so that when not being used, it is held flat within the base support. When it is necessary to recline the child restraint 10 from the upright position, the frame 26 is rotated out of the base support 17 by lever arm 28 to an inclined position shown in phantom in Fig 6 wherein the free swinging ends 29 of the frame 26 locate in pockets (not shown) on the underside of the seat portion 12 adjacent its depending front wall 30. In this position the child restraint 10 is supported both by the base support 17 and the frame 26 with the front edge of the seat portion 12 raised above the base support 17. As can be seen in Fig 5, the child restraint 10 is inclined to a position where it would be extremely comfortable for a child when sleeping.

As shown in Fig 6, the tilt frame 26 is retained in its non-operative position within the base support 17 by means of projection 31 which serves as a clip. As also shown in Fig 6, the base support 17 can be clipped to the seat portion 12 by means of lugs 33 which clippingly engage with the bottom edge of the front wall 30 of the seat portion 12 (when the restraint is in the position shown in Fig 4)

Alternatively, the angle of inclination in either of the two use positions may be varied by a spacer (not illustrated) which can be between the base support 17 and the child restraint 10. Preferably, the spacer comprises a wedge-shaped moulding which can be positioned between the base support 17 and child restraint 10 such that it positively locates to both the base support 17 and child restraint 10. The spacer has the effect of holding the base support 17 away from the child restraint 10, such that when the child restraint 10 is used in the cradle style position, the infant may be brought to a more upright position, and when the child restraint 10 is used in the upright position, the back support portion 11 may be reclined rearwardly.

As seen in this embodiment, the use of the base support 17 allows a much simplified moulding of the child restraint 10. The mould may comprise a simple two-part die with minimal use of moving cores for moulding the back support and seat portions and side walls 11, 12 and 13, together with the longitudinal stiffening ribs 14. The base support 17 which moves between two use positions enables the child restraint 10 to be supported over a much greater surface area thereby lessening the chance of damage to the vehicle seat, and increasing the stability of the child restraint in each of the two positions of use. In addition to increased stability, the greater surface area provides for better dynamic stability of the child restraint 10 during a vehicle collision.

## Claims

1. A dual position child restraint for use on a motor vehicle seat comprising a child restraint seat having longitudinal stiffening ribs extending across the rear surfaces thereof, the seat comprising a back support portion and a seat portion and being positionable on the vehicle seat so that in a first position of use the back support portion is in a substantially reclined position, while in a second position of use the back portion is in a substantially vertical position, characterised in that the seat is provided with a base support arranged to distribute load over a substantially large surface area to prevent damage to said vehicle seat, said base support being adapted for attachment to said seat in two support positions so that it can support the child restraint seat on the vehicle seat in either of said two positions of use.

2. A dual position child restraint according to claim 1 wherein said base support is hingedly attached to said child restraint seat so that it can rotate between its two support positions.

3. A dual position child restraint according to claim 1 or claim 2 wherein said base support has longitudinal channels and recesses formed in each of its major surfaces, said channels and recesses being arranged to receive and locate at least some of said longitudinal stiffening ribs.

4. A dual position child restraint according to claim 2 wherein said base support has clips formed thereon which engage portions of the child restraint seat to releasably clip said base support in at least one of its support positions.

5. A dual position child restraint according to any one of the preceding claims wherein a spacer is placed between said base support and said child restraint seat to vary the inclination of said child restraint seat.

6. A dual position child restraint according to any one of claims 1 to 4 wherein tilt support means is attached to said base support and operable to vary the inclination of said child restraint seat.

7. A dual position child restraint according to claim 6 wherein said tilt support means comprises a tilt frame that is pivotally attached to said base support so that it can be stored in an out-of-use position within the base support, and rotated out of the base support when used to vary the inclination of said child restraint seat.

8. A dual position child restraint according to claim 7 wherein said tilt frame comprises a lever arm connected thereto for manually actuating movement of the tilt frame.

9. A dual position child restraint according to claim 7 or claim 8 wherein said base support is provided with clip means for releasably clipping the tilt frame to the base support when the tilt frame is in its out-of-use position.

10. A dual position child restraint as hereinbefore described with reference to and as illustrated in the accompanying drawings.
